# EUROPEAN PATENT APPLICATION

(11) **EP 4 617 810 A1**
(43) Date of publication of application: **17.09.2025**
(21) Application number: 22969280.1
(22) Date of filing: 23.12.2022
(51) Int. Cl.: G05D 1/20

(54) **CONTROL DEVICE, CONTROL METHOD, AND PROGRAM**

(71) Applicant: Honda Motor Co., Ltd., Toyko 105-8404 (JP)
(72) Inventor: MATSUZAKI, Sango, Wako-shi, Saitama 351-0193 (JP); KOMURO, Misa, Wako-shi, Saitama 351-0193 (JP)
(74) Representative: Kiwit, Benedikt
(86) International application number: PCT/JP2022/047737
(87) International publication number: WO 2024/134901

(57) **Abstract**

A control device that controls a moving object moving autonomously by following an object to be followed in an area where a pedestrian walks, the control device including a recognition unit configured to recognize objects including pedestrians and the object to be followed, a setting unit configured to set a position having a predetermined positional relationship with the object to be followed as an arrival position of the moving object, a route generation unit configured to generate a route from the position of the moving object to the arrival position, and a driving control unit configured to control a driving device attached to the moving object so that the moving object moves along the route, in which, when a first condition is satisfied, the setting unit sets a plurality of the arrival positions and provides them to the route generation unit, and when the first condition is not satisfied, the setting unit sets one arrival position and provides it to the route generation unit.

## Description

### TECHNICAL FIELD

The present invention relates to a control device, a control method, and a program.

### BACKGROUND ART

In recent years, moving objects (referred to as robots, micromobility, and the like) that move autonomously following users for purposes such as transporting the users' luggage have been put into practical use. An invention for a traveling control device related to micromobility has been disclosed (Patent Document 1).

### Citation List

### Patent Document

Patent Document 1: Japanese Unexamined Patent Application, First Publication No. 2022-134583

### SUMMARY OF INVENTION

### Technical Problem

In the related art, it may not be possible to generate an appropriate route depending on a situation in which a moving object is placed.

The present invention has been made in view of such circumstances, and one of its objectives is to provide a control device, a control method, and a program which are capable of generating an appropriate route depending on a situation in which a moving object is placed.

### Solution to Problem

A control device, a control method, and a program according to the present invention adopt the following configuration.
(1) A control device according to one aspect of the present invention is a control device that controls a moving object moving autonomously by following an object to be followed in an area where a pedestrian walks, the control device including a recognition unit configured to recognize objects including pedestrians and the object to be followed, a setting unit configured to set a position having a predetermined positional relationship with the object to be followed as an arrival position of the moving object, a route generation unit configured to generate a route from the position of the moving object to the arrival position, and a driving control unit configured to control a driving device attached to the moving object so that the moving object moves along the route, in which, when a first condition is satisfied, the setting unit sets a plurality of the arrival positions and provides them to the route generation unit, and when the first condition is not satisfied, the setting unit sets one arrival position and provides it to the route generation unit, and when a plurality of the arrival positions are provided from the setting unit, the route generation unit generates the route for at least some of the plurality of arrival positions and selects one route on the basis of a predetermined evaluation criterion.
(2): In the above aspect (1), the first condition is that the recognition unit recognizes a predetermined number or more of pedestrians within a predetermined area.
(3) In the above aspect (1), the recognition unit further recognizes the orientation of the object to be followed, and the setting unit sets a plurality of the arrival positions behind the object to be followed in a direction intersecting the orientation of the object to be followed when the first condition is satisfied.
(4) In the above aspect (1), the recognition unit further recognizes the speed of the object to be followed, and the setting unit sets the position of the object to be followed to the arrival position when the speed of the object to be followed is less than a predetermined speed.
(5) In the above aspect (1), the recognition unit further recognizes the orientation of the object to be followed, and when the first condition is not satisfied and a second condition including a condition regarding an angle between the orientation of the object to be followed and the orientation of the moving object is not satisfied, the setting unit sets, as the arrival position, a candidate closest to the moving object among a plurality of candidates for the arrival position which are lined up behind the object to be followed in a direction intersecting the orientation of the object to be followed.
(6) In the above aspect (5), the second condition includes a condition that the angle between the orientation of the object to be followed and the orientation of the moving object is equal to or smaller than a reference angle.
(7) In the above aspect (6), the second condition further includes a condition that, when the orientation of the moving object is a first coordinate axis and an orientation perpendicular to the first coordinate axis is a second coordinate axis, a distance between the object to be followed and the moving object with respect to the first coordinate axis is less than a first reference distance, and a distance between the object to be followed and the moving object with respect to the second coordinate axis is less than a second reference distance.
(8) In the above aspect (5), the setting unit sets one of the arrival positions diagonally behind the object to be followed when the first condition is not satisfied and the second condition is satisfied.
(9) In the above aspect (5), when the second condition is satisfied, the setting unit changes a threshold value for the second condition to a side that makes the second condition more likely to be satisfied, and maintains the changed threshold value until it is determined that the second condition is not satisfied using the changed threshold value.
(10) A control method according to another aspect of the present invention is a control method performed by a control device that controls a moving object moving autonomously by following an object to be followed in an area where a pedestrian walks, the control method including recognizing objects including pedestrians and the object to be followed, setting a position having a predetermined positional relationship with the object to be followed as an arrival position of the moving object, generating a route from the position of the moving object to the arrival position, controlling a driving device attached to the moving object so that the moving object moves along the route, when performing the setting, setting a plurality of the arrival positions when a first condition is satisfied, and setting one arrival position when the first condition is not satisfied, and when generating the route, generating the route for at least some of the plurality of arrival positions and selecting one route on the basis of a predetermined evaluation criterion when a plurality of the arrival positions are set.
(11): A program according to another aspect of the present invention is a program for causing a processor of a control device that controls a moving object moving autonomously by following an object to be followed in an area where a pedestrian walks to recognize objects including pedestrians and the object to be followed, set a position having a predetermined positional relationship with the object to be followed as an arrival position of the moving object, generate a route from the position of the moving object to the arrival position, control a driving device attached to the moving object so that the moving object moves along the route, when performing the setting, set a plurality of the arrival positions when a first condition is satisfied, and set one arrival position when the first condition is not satisfied, and when generating the route, generate the route for at least some of the plurality of arrival positions and select one route on the basis of a predetermined evaluation criterion when a plurality of the arrival positions are set.
(12) A control device according to another aspect of the present invention is a control device that controls a moving object moving autonomously by following an object to be followed in an area where a pedestrian walks, the control device including a recognition unit configured to recognize objects including pedestrians and the object to be followed, a setting unit configured to set a position having a predetermined positional relationship with the object to be followed as an arrival position of the moving object, a route generation unit configured to generate a route from the position of the moving object to the arrival position, and a driving control unit configured to control a driving device attached to the moving object so that the moving object moves along the route, in which the recognition unit further recognizes the orientation of the object to be followed, and when a predetermined condition including a condition regarding an angle between the orientation of the object to be followed and the orientation of the moving object is not satisfied, the setting unit sets, as the arrival position, a candidate closest to the moving object among a plurality of candidates for the arrival position which are lined up behind the object to be followed in a direction intersecting the orientation of the object to be followed.
(13) A control method according to another aspect of the present invention is a control method performed by a control device that controls a moving object moving autonomously by following an object to be followed in an area where a pedestrian walks, the control method including recognizing objects including pedestrians and the object to be followed, setting a position having a predetermined positional relationship with the object to be followed as an arrival position of the moving object, generating a route from the position of the moving object to the arrival position, controlling a driving device attached to the moving object so that the moving object moves along the route, when performing the recognition, further recognizing the orientation of the object to be followed, and when performing the setting, setting, as the arrival position, a candidate closest to the moving object among a plurality of candidates for the arrival position which are lined up behind the object to be followed in a direction intersecting the orientation of the object to be followed when a predetermined condition including a condition regarding an angle between the orientation of the object to be followed and the orientation of the moving object is not satisfied.
(14) A program according to another aspect of the present invention is a program for causing a processor of a control device that controls a moving object moving autonomously by following an object to be followed in an area where a pedestrian walks to recognize objects including pedestrians and the object to be followed, set a position having a predetermined positional relationship with the object to be followed as an arrival position of the moving object, generate a route from the position of the moving object to the arrival position, control a driving device attached to the moving object so that the moving object moves along the route, when performing the recognition, further recognize the orientation of the object to be followed, and when performing the setting, set, as the arrival position, a candidate closest to the moving object among a plurality of candidates for the arrival position which are lined up behind the object to be followed in a direction intersecting the orientation of the object to be followed when a predetermined condition including a condition regarding an angle between the orientation of the object to be followed and the orientation of the moving object is not satisfied.

### Advantageous Effects of Invention

According to the aspects (1) to (14), a route can be generated appropriately depending on a situation in which a moving object is placed.

### BRIEF DESCRIPTION OF DRAWINGS

[FIG. 1] A diagram showing the configuration of a moving object.
[FIG. 2] A diagram showing the configuration of a control device.
[FIG. 3] A diagram showing an overview of risks that are set by a risk distribution prediction unit.
[FIG. 4] A flowchart showing an example of a flow of processing executed by an arrival position setting unit.
[FIG. 5] A diagram showing a first condition.
[FIG. 6] A diagram showing a second condition.
[FIG. 7] A diagram showing an example of a specified position.

### DESCRIPTION OF EMBODIMENTS

### [Overview]

Hereinafter, an embodiment of a control device, a control method, and a program of the present invention will be described with reference to the drawings. The control device according to the present invention controls a driving device of a moving object to move the moving object. The control device may be mounted on the moving object, or may be installed in a position separate from the moving object and remotely control the moving object via communication. A moving object in the present invention is an object that moves autonomously while following an object to be followed in an area where pedestrians walk. The area where pedestrians walk is a sidewalk, a public open space, a floor inside a building, and the like, and may include a roadway. In the following description, it is assumed that no human rides on the moving object, but it is possible for a human to ride on the moving object. The object to be followed is, for example, a pedestrian (hereinafter referred to as a master M), but it may also be a robot or an animal. The moving object is used for purposes such as accompanying the master M on shopping trips and carrying luggage, but it may also be used for other purposes, such as carrying a patient in a hospital and moving to follow a nurse who is the master M, or a plurality of moving objects may move in a formation, following a master moving object which is the master M.

### [Basic configuration]

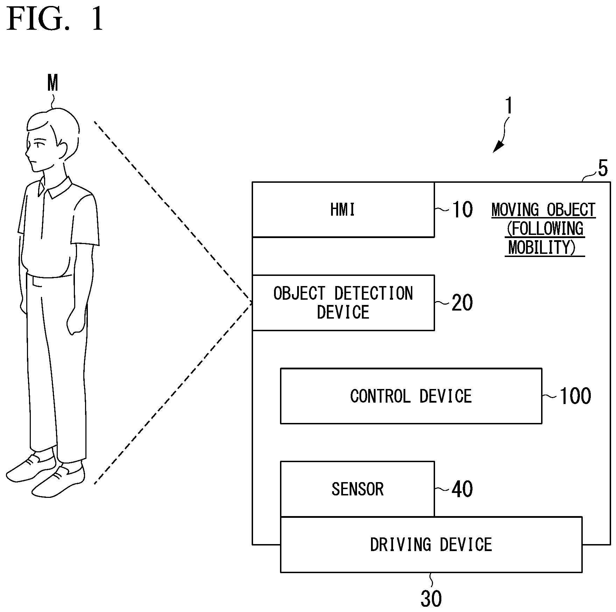

FIG. 1 is a diagram showing the configuration of a moving object 1. The moving object 1 is equipped with, for example, a human machine interface (HMI) 10, an object detection device 20, a driving device 30, a sensor 40, and a control device 100. These components are supported or accommodated by a base 5. The base 5 may be provided with a luggage accommodation unit and the like.

The HMI 10 presents various information to the master M and receives input operations by the master M. The HMI 30 includes various display devices, speakers, buzzers, touch panels, switches, keys, short-range wireless communication devices, and the like.

The object detection device 20 is a device that generates data for recognizing objects (including pedestrians) and the master M that exist around the moving object 1. The object detection device 20 includes, for example, a camera of which the imaging range is an area around the moving object 1. The object detection device 20 may include sensors such as a radar device, a light detection and ranging (LIDAR), and an ultrasonic sensor, and an object recognition device that specifies objects by performing sensor fusion processing based on outputs of these sensors.

The driving device 30 is a mechanism for moving the moving object 1 including the base 5 in any direction. The driving device 30 includes, for example, a plurality of wheels, a driving motor attached to one or more wheels, and a steering device attached to one or more wheels. There are no particular restrictions on the configuration of the driving device 30, and the driving device 30 may have any configuration. In principle, the driving device 30 moves the moving object 1 while making the front surface of the base 5 face the traveling direction of the moving object 1.

The sensor 40 is a sensor for detecting the movement of the moving object 1. The sensor 40 includes, for example, a wheel speed sensor for detecting the speed of the wheels, an acceleration sensor for detecting the acceleration acting on the moving object 1, a yaw rate sensor attached near the center of gravity in the horizontal direction of the base 5, a steering angle sensor for detecting the steering angle of the steered wheels (steering wheels), and an orientation sensor for detecting the orientation of the moving object 1 in the horizontal direction.

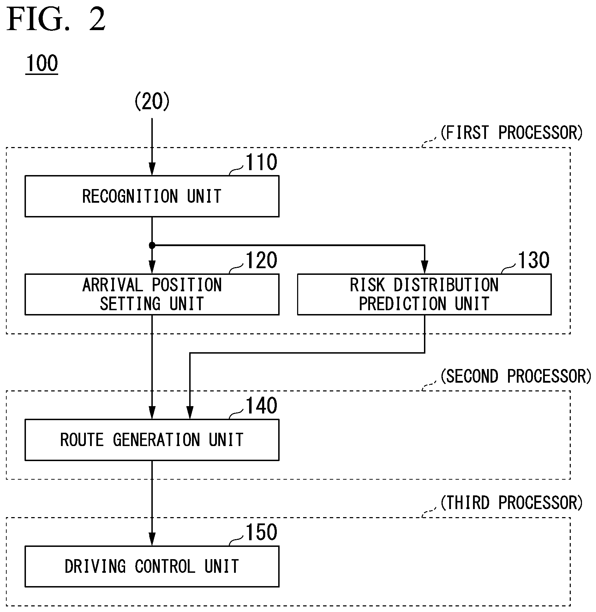

FIG. 2 is a diagram showing the configuration of the control device 100. The control device 100 includes, for example, a recognition unit 110, an arrival position setting unit 120, a risk distribution prediction unit 130, a route generation unit 140, and a driving control unit 150. These components are implemented by, for example, a hardware processor such as a Central Processing Unit (CPU) executing a program (software). Some or all of these components may be implemented by hardware (including circuitry) such as a large scale integration (LSI), an application specific integrated circuit (ASIC), a field-programmable gate array (FPGA), or a graphics processing unit (GPU), or may be implemented by software and hardware in combination. The program may be stored in advance in a storage device (a storage device including a non-transitory storage medium) such as a hard disk drive (HDD) or a flash memory, or may be stored in a removable storage medium (a non-transitory storage medium) such as a DVD or a CD-ROM and installed in the storage device by installing the storage medium in a driving device.

Without this definition, there is a fear that it may be difficult to obtain rights in the United States.

At least the arrival position setting unit 120 and the route generation unit 140 are functions that are implemented, for example, by separate hardware processors. For example, a first processor functions as the recognition unit 110, the arrival position setting unit 120, and the risk distribution prediction unit 130, a second processor functions as the route generation unit 140, and a third processor functions as the driving control unit 150.

The recognition unit 110 recognizes objects including pedestrians and the master M on the basis of data output by the object detection device 20. When the object detection device 20 is a camera, the recognition unit 110 recognizes pedestrians by inputting camera images into a trained model for identifying pedestrians. The same applies to objects other than pedestrians. In order to distinguish between pedestrians and the master M, the recognition unit 110 may store a plurality of images of the master M which are captured by the camera in advance as templates in a storage unit (not shown) and specify the master M by comparing the templates with the camera images. In addition, the recognition unit 110 may recognize the position of the master M by using communication directivity to perform short-range wireless communication between a terminal device held by the master M and the HMI 10. As described below, the recognition unit 110 also recognizes the orientation of the master M.

The arrival position setting unit 120 sets a position that has a predetermined positional relationship with the master M as an arrival position AP of the moving object 1. Details will be described below.

The risk distribution prediction unit 130 sets a risk, which is an index value indicating the degree to which the moving object 1 should not enter or approach, on an assumed plane S that represents the area around the moving object 1 as a two-dimensional plane viewed from above. The higher the risk value, the more likely it is that the moving object 1 should not enter or approach, and the closer the risk value is to zero, the more preferable it is for the moving object 1 to pass through. However, this relationship may be reversed. The risk distribution prediction unit 130 sets risks on the assumed plane S not only for the present point in time, but also for each future point in time specified at certain time intervals, such as the current time t, after Δt (time t + Δt), after 2Δt (time t + 2Δt), and the like. The risk distribution prediction unit 130 predicts the risk at each future point in time on the basis of changes in pedestrians that are continuously recognized by the recognition unit 110.

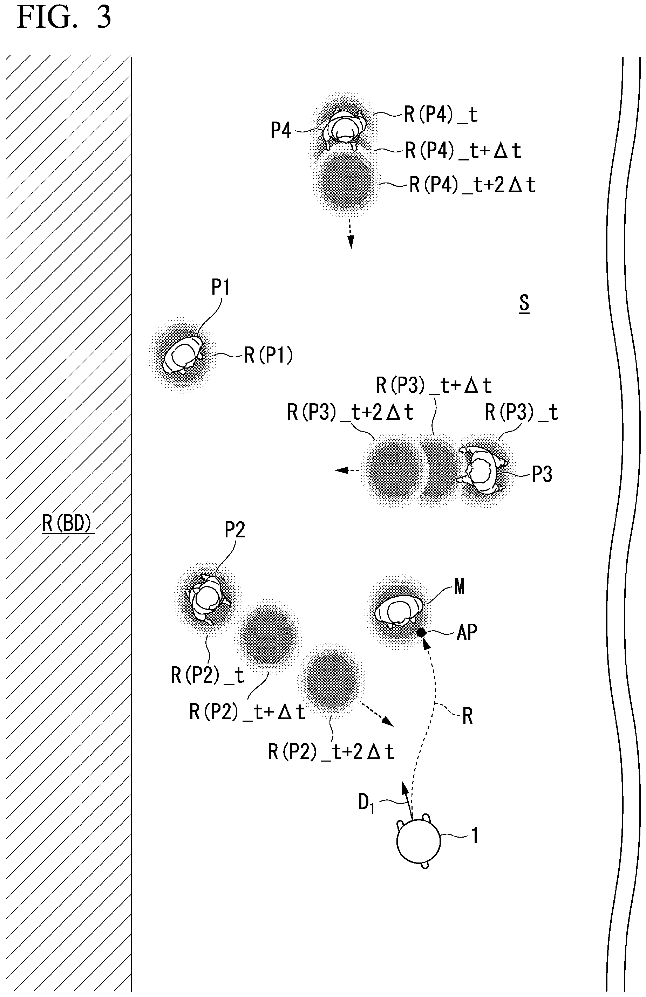

FIG. 3 is a diagram showing an overview of risks that are set by the risk distribution prediction unit 130. The risk distribution prediction unit 130 sets risks on the assumed plane S for objects (including the master M and pedestrians Pk) other than the moving object 1, with contour lines being ellipses or circles based on the direction of movement and speed, and sets a fixed value of risk for an immovable area BD such as a wall. In the drawing, D₁ is the orientation of the moving object 1 (details will be described below). R(P1) is the risk of a stationary pedestrian P1, R(P2) is the risk of a moving pedestrian P2, R(P3) is the risk of a moving pedestrian P3, and R(P 4) is the risk of a moving pedestrian P4. Since the pedestrians P2 to P4 continue to move, a risk is set at a position different from the current time for each future point in time. R(P2)_t is the risk of the pedestrian P2 in a certain control cycle, R(P2)_t + Δt is the risk of the pedestrian P2 in the next control cycle, and R(P2)_t + Δ2t is the risk of the pedestrian P2 in the next control cycle. R(BD) is the risk of the immovable area BD. In the drawing, the darkness of hatching indicates the value of a risk, and the darker the hatching, the greater the risk.

The route generation unit 140 generates a route for the moving object 1 to reach the arrival position AP at each future point in time while avoiding passing through any position with a risk value equal to or greater than a predetermined value. P in FIG. 3 represents the generated route. For example, the route generation unit 140 comprehensively searches for points through which a route R can pass for each sampling distance (for example, approximately 1 m), and generates, as the route R, a route candidate that has a good score (a score based on a predetermined evaluation criterion) obtained by evaluating the degree of curvature of the route among the route candidates connecting them. Furthermore, the route generation unit 140 may correct the generated route R so that it becomes smooth, for example, by fitting it to a spline curve. The route R may be generated on the assumption that the moving object 1 moves at a constant speed, but the route R may be given a speed profile such as deceleration, stopping, and acceleration.

The driving control unit 150 controls the driving device 30 attached to the moving object 1 so that the moving object 1 moves along the route R.

### [Setting of arrival point]

A process of setting the arrival position AP by the arrival position setting unit 120 will be described below. The arrival position setting unit 120 uses different methods of setting the arrival position AP on the basis of a situation where the moving object 1 and the master M are placed.

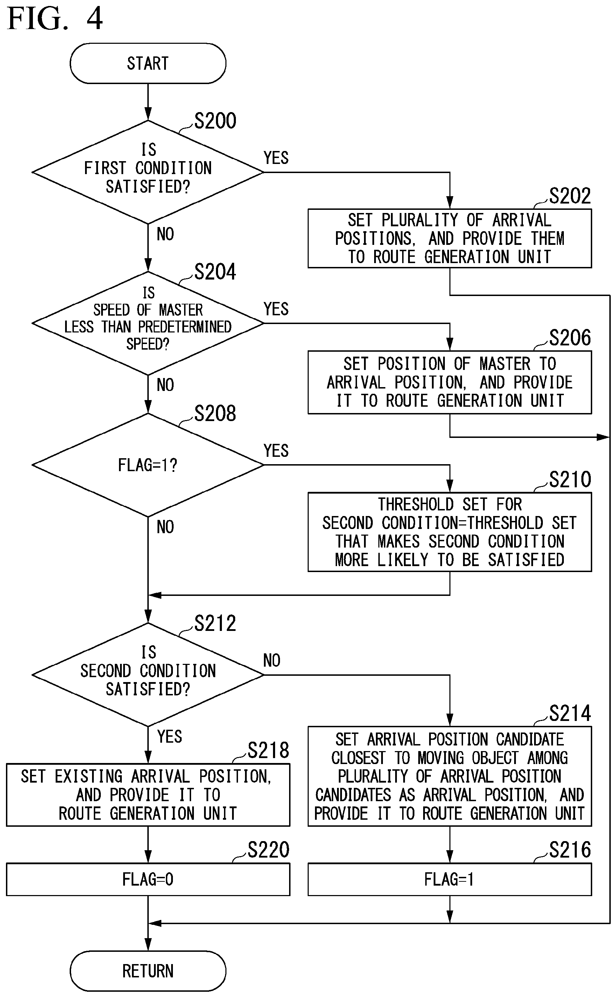

FIG. 4 is a flowchart showing an example of a flow of processing executed by the arrival position setting unit 120. First, the arrival position setting unit 120 determines whether a first condition is satisfied (step S200).

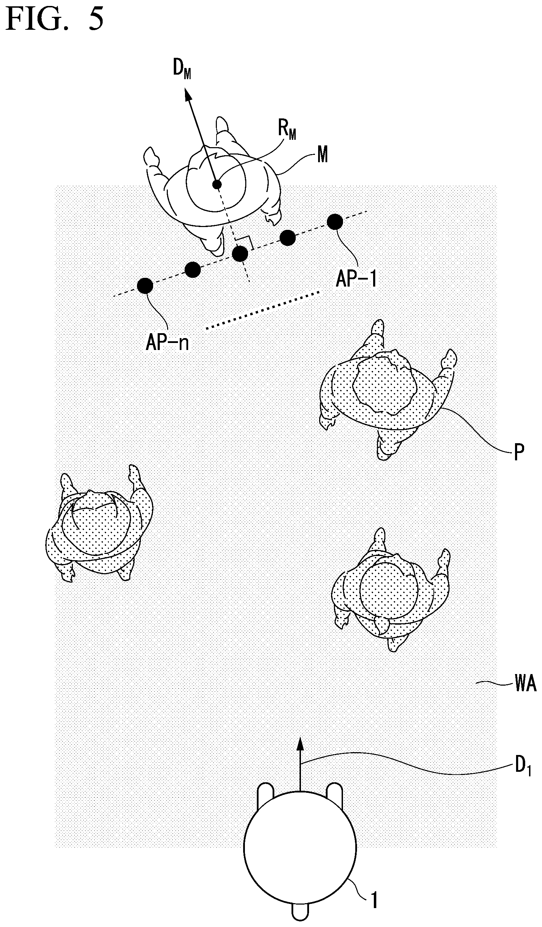

The first condition is, for example, that the recognition unit 110 recognizes a predetermined number or more of pedestrians within a predetermined area. FIG. 5 is a diagram showing the first condition. In the drawing, WA is the predetermined area. The recognition unit 110 sets the predetermined area WA in a space between the moving object 1 and the master M in accordance with some criteria, and counts the pedestrians P who are present within the predetermined area WA. The method of setting the predetermined area WA can be determined appropriately, and for example, it may be set to an area having a predetermined radius on the traveling direction side of the moving object 1.

When the first condition is satisfied, the arrival position setting unit 120 sets a plurality of arrival positions AP-1 to AP-k (k is a natural number equal to or greater than 2) behind the master M in a direction intersecting (for example, perpendicular) to an orientation D_{M} of the master M, and provides them to the route generation unit 140 (step S202). In this case, the route generation unit 140 generates routes from the moving object 1 to at least some of the plurality of arrival positions AP-1 to AP-k, and selects a route with the best score among them. The route generation unit 140 may generate and evaluate routes to each of the plurality of arrival positions AP-1 to AP-k, or when the route generation unit 140 selects one route while performing route generation and evaluation in parallel, the route generation unit 140 may omit route generation for the subsequent arrival positions. In addition, before performing the process of generating routes and evaluating the routes, the route generation unit 140 may perform a primary evaluation of the arrival positions on the basis of some criteria and perform cut-off (removing those with poor results in the primary evaluation), and then generate routes for the remaining arrival positions and evaluate the routes. "Providing" may mean transmitting data by communication between processors, or writing data to a shared area of a memory.

Regarding the orientation D_{M} of the master M, the recognition unit 110 recognizes the movement vector, face orientation, body orientation, or a combination thereof as the orientation D_{M} of the master M. At this time, the recognition unit 110 may perform a moving average process to avoid vibration in a recognition result.

When the first condition is not satisfied, the arrival position setting unit 120 sets one arrival position AP and provides it to the route generation unit 140, as described below. First, the arrival position setting unit 120 determines whether the speed of the master M is less than a predetermined speed (step S204). For example, the speed of the master M is obtained by subtracting the speed vector of the moving object 1 from the relative speed vector of the master M obtained from the change in the relative position of the master M with respect to the moving object 1, which is continuously recognized. When the speed of the master M is less than the predetermined speed, the arrival position setting unit 120 sets a representative position R_{M} of the master M as the arrival position AP and provides it to the route generation unit 140 (step S206). In this case, since a risk centered on the master M is set, a situation in which the moving object 1 collides with the master M is avoided. The representative position R_{M} is, for example, the position of the master M's feet obtained as a result of image processing, and is determined on the basis of an arbitrary criterion.

When the speed of the master M is equal to or greater than the predetermined speed, the arrival position setting unit 120 determines whether a flag to be described below is set to 1 (step S208). This flag is for determining whether it is set to a side where a second condition to be described below is more likely to be satisfied (flag 1) or set to a side where the second condition is less likely to be satisfied (flag 0). When the flag is set to 1, the arrival position setting unit 120 sets a threshold set for the second condition to a threshold set that makes the second condition more likely to be satisfied (step S210).

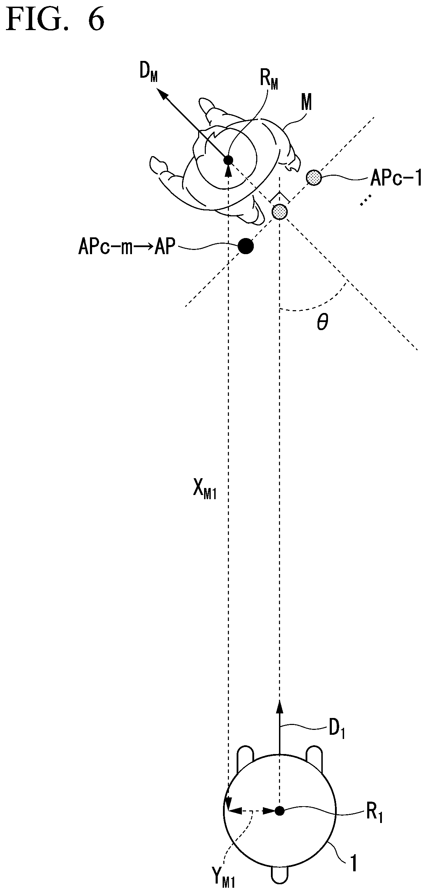

Next, the arrival position setting unit 120 determines whether the second condition is satisfied. The second condition includes at least a condition regarding an angle θ between the orientation D_{M} of the master M and an orientation D₁ of the moving object 1. FIG. 6 is a diagram showing the second condition. More specifically, the second condition is that, for example, (1) the angle θ is less than a reference angle θref, (2) a distance X_{M1} from a representative position R1 of the moving object 1 to a representative position R_{M} of the master M on a first coordinate axis when the orientation D₁ of the moving object 1 is set as the first coordinate axis is less than a first reference distance Xref, and (3) a distance Y_{M1} from the representative position R1 of the moving object 1 to the representative position R_{M} of the master M on a second coordinate axis when a direction perpendicular to the orientation D₁ of the moving object 1 is set as the second coordinate axis is less than a second reference distance Yref.

Here, when the flag is 1, the reference angle θref, the first reference distance Xref, and the second reference distance Yref are set as follows. These are threshold sets that make it easy for the second condition to be satisfied.
θref: large (for example, 30 degrees)
Xref: large (for example, 10 [m])
Yref: large (for example, 3 [m])

On the other hand, when the flag is 0, the reference angle θref, the first reference distance Xref, and the second reference distance Yref are set as follows. These are threshold sets that make it easy for the second condition to be satisfied.
θref: small (for example, 20 degrees)
Xref: small (for example, 7 m)
Yref: small (for example, 2 m)

The orientation D₁ of the moving object 1 may be, for example, an orientation from the center of gravity of the moving object 1 toward an arbitrarily determined forward direction (that is, the front side of the base 5), may be an orientation along the moving vector of the moving object 1, or may be an orientation obtained by combining them.

When the second condition is not satisfied, the arrival position setting unit 120 sets an arrival position candidate closest to the moving object 1 as the arrival position AP among a plurality of arrival position candidates APc-1 to APc-m (m is a natural number equal to or greater than 2) that are lined up behind the master M in a direction intersecting the orientation D_{M} of the master M, and provides it to the route generation unit 140 (step S214). In the example of FIG. 6, the arrival position candidate APc-m is set as the arrival position AP. For example, n > m. Then, the arrival position setting unit 120 sets the flag to 1 (step S216).

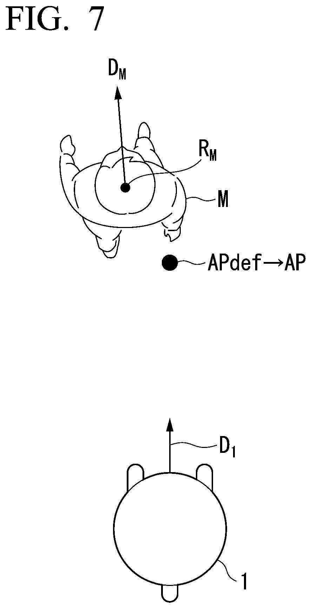

When the second condition is satisfied, the arrival position setting unit 120 sets one arrival position AP at a specified position diagonally behind the master M and provides it to the route generation unit 140 (step S218). Then, the arrival position setting unit 120 sets the flag to 0 (step S220). FIG. 7 is a diagram showing an example of a specified position APdef. In the example shown in the drawing, the specified position APdef is set to the right rear of the master M.

By performing the processing in this manner, the control device 100 can generate a route appropriately depending on a situation in which the moving object 1 is placed. When there are few pedestrians around the moving object 1 and the master M, and the master M is moving in one direction at a relatively slow speed (when the first condition is not satisfied and the second condition is satisfied), the moving object 1 moves to follow the specified position APdef shown in FIG. 7, and thus the moving object 1 is always present at the same position when viewed from the master M. Thereby, the master M can feel a sense of security.

On the other hand, when there are many pedestrians around the moving object 1 and the master M, the route R that the moving object 1 can take is limited, and there is a concern that the moving object 1 will not be able to follow the master M sufficiently and will eventually lose the position of the master M. In response to this, when the first condition is satisfied, the control device 100 provides a plurality of arrival positions AP to the route generation unit 140, and thus the route R is generated to follow a position suitable for the route generation unit 140 among the plurality of arrival positions AP. As a result, the above concern can be alleviated.

Furthermore, when the master M makes a sudden turn, acceleration, or the like, the moving object 1 cannot sufficiently follow the master M depending on motion performance of the moving object 1 and may be separated from the master M. In particular, when the master M makes a sudden left turn, the specified position APdef is the right rear, and thus the moving object 1 makes a wide turn to follow the trajectory of the master M, and there is a concern that the moving object 1 will be further separated from the master M or will become a hindrance to surrounding pedestrians due to the wide turn. In response to this, when the second condition is not satisfied, the control device 100 sets the position closest to the moving object 1 among the plurality of candidate arrival positions APc as the arrival position AP, thereby enabling the moving object 1 to rapidly follow the master M. The second condition is set to be satisfied when the master M makes a sudden turn or acceleration in a vertical direction or horizontal direction, and thus the control device 100 can perform the above-described processing suitably.

Further, in the above-described processing, once the second condition is satisfied, the threshold set for the second condition is set to a side where the second condition is more likely to be satisfied. Thereby, it is possible to prevent the movement of the moving object 1 from being disturbed by the second condition being satisfied and not being satisfied repeatedly.

In the above description, the control device 100 is mounted on the moving object 1, but the present invention is not limited thereto. The control device 100 may be installed at a location away from the moving object 1, acquire output data from the object detection device 20 through communication, and transmit a driving instruction signal to the driving device 30, that is, remotely control the moving object 1.

According to the above-described embodiment, a route can be generated appropriately depending on a situation in which the moving object 1 is placed.

The above-described embodiment can be expressed as follows:
A control device including:
one or more storage media storing computer-readable instructions;
a first processor connected to the one or more storage media, and
a second processor connected to the one or more storage media,
in which the first processor recognizes objects including pedestrians and the object to be followed by executing the computer-readable instructions to set a position having a predetermined positional relationship with the object to be followed as an arrival position of the moving object,
the second processor generates routes from the position of the moving object to the arrival position by executing the computer-readable instructions,
the first processor, by executing the computer-readable instructions, sets a plurality of the arrival positions and provides them to the route generation unit when a first condition is satisfied, and sets one arrival position and provides it to the route generation unit when the first condition is not satisfied, and
the second processor, by executing the computer-readable instructions, generates the routes for at least some of the plurality of arrival positions when the plurality of arrival positions are provided, and selects one route on the basis of a predetermined evaluation criterion.

Although the present invention has been described above using the embodiment, the present invention is not limited to the embodiment, and various modifications and substitutions can be made without departing from the scope of the present invention.

### REFERENCE SIGNS LIST

1 Moving object
20 Object detection device
30 Driving device
100 Control device
110 Recognition unit
120 Arrival position setting unit
130 Risk distribution prediction unit
140 Route generation unit
150 Driving control unit

## Claims

1. A control device that controls a moving object moving autonomously by following an object to be followed in an area where a pedestrian walks, the control device comprising:
a recognition unit configured to recognize objects including pedestrians and the object to be followed;
a setting unit configured to set a position having a predetermined positional relationship with the object to be followed as an arrival position of the moving object;
a route generation unit configured to generate a route from the position of the moving object to the arrival position; and
a driving control unit configured to control a driving device attached to the moving object so that the moving object moves along the route, wherein,
when a first condition is satisfied, the setting unit sets a plurality of the arrival positions and provides them to the route generation unit, and when the first condition is not satisfied, the setting unit sets one arrival position and provides it to the route generation unit, and
when a plurality of the arrival positions are provided from the setting unit, the route generation unit generates the route for at least some of the plurality of arrival positions and selects one route on the basis of a predetermined evaluation criterion.

2. The control device according to claim 1, wherein the first condition is that the recognition unit recognizes a predetermined number or more of pedestrians within a predetermined area.

3. The control device according to claim 1, wherein
the recognition unit further recognizes the orientation of the object to be followed, and
the setting unit sets a plurality of the arrival positions behind the object to be followed in a direction intersecting the orientation of the object to be followed when the first condition is satisfied.

4. The control device according to claim 1, wherein
the recognition unit further recognizes the speed of the object to be followed, and
the setting unit sets the position of the object to be followed to the arrival position when the speed of the object to be followed is less than a predetermined speed.

5. The control device according to claim 1, wherein
the recognition unit further recognizes the orientation of the object to be followed, and
when the first condition is not satisfied and a second condition including a condition regarding an angle between the orientation of the object to be followed and the orientation of the moving object is not satisfied, the setting unit sets, as the arrival position, a candidate closest to the moving object among a plurality of candidates for the arrival position which are lined up behind the object to be followed in a direction intersecting the orientation of the object to be followed.

6. The control device according to claim 5, wherein the second condition includes a condition that the angle between the orientation of the object to be followed and the orientation of the moving object is equal to or smaller than a reference angle.

7. The control device according to claim 6, wherein the second condition further includes a condition that, when the orientation of the moving object is a first coordinate axis and an orientation perpendicular to the first coordinate axis is a second coordinate axis, a distance between the object to be followed and the moving object with respect to the first coordinate axis is less than a first reference distance, and a distance between the object to be followed and the moving object with respect to the second coordinate axis is less than a second reference distance.

8. The control device according to claim 5, wherein the setting unit sets one of the arrival positions diagonally behind the object to be followed when the first condition is not satisfied and the second condition is satisfied.

9. The control device according to claim 5, wherein, when the second condition is satisfied, the setting unit changes a threshold value for the second condition to a side that makes the second condition more likely to be satisfied, and maintains the changed threshold value until it is determined that the second condition is not satisfied using the changed threshold value.

10. A control method performed by a control device that controls a moving object moving autonomously by following an object to be followed in an area where a pedestrian walks, the control method comprising:
recognizing objects including pedestrians and the object to be followed;
setting a position having a predetermined positional relationship with the object to be followed as an arrival position of the moving object;
generating a route from the position of the moving object to the arrival position;
controlling a driving device attached to the moving object so that the moving object moves along the route;
when performing the setting, setting a plurality of the arrival positions when a first condition is satisfied, and setting one arrival position when the first condition is not satisfied; and
when generating the route, generating the route for at least some of the plurality of arrival positions and selecting one route on the basis of a predetermined evaluation criterion when a plurality of the arrival positions are set.

11. A program for causing a processor of a control device that controls a moving object moving autonomously by following an object to be followed in an area where a pedestrian walks to:
recognize objects including pedestrians and the object to be followed;
set a position having a predetermined positional relationship with the object to be followed as an arrival position of the moving object;
generate a route from the position of the moving object to the arrival position;
control a driving device attached to the moving object so that the moving object moves along the route;
when performing the setting, set a plurality of the arrival positions when a first condition is satisfied, and set one arrival position when the first condition is not satisfied; and
when generating the route, generate the route for at least some of the plurality of arrival positions and select one route on the basis of a predetermined evaluation criterion when a plurality of the arrival positions are set.

12. A control device that controls a moving object moving autonomously by following an object to be followed in an area where a pedestrian walks, the control device comprising:
a recognition unit configured to recognize objects including pedestrians and the object to be followed;
a setting unit configured to set a position having a predetermined positional relationship with the object to be followed as an arrival position of the moving object;
a route generation unit configured to generate a route from the position of the moving object to the arrival position; and
a driving control unit configured to control a driving device attached to the moving object so that the moving object moves along the route, wherein
the recognition unit further recognizes the orientation of the object to be followed, and
when a predetermined condition including a condition regarding an angle between the orientation of the object to be followed and the orientation of the moving object is not satisfied, the setting unit sets, as the arrival position, a candidate closest to the moving object among a plurality of candidates for the arrival position which are lined up behind the object to be followed in a direction intersecting the orientation of the object to be followed.

13. A control method performed by a control device that controls a moving object moving autonomously by following an object to be followed in an area where a pedestrian walks, the control method comprising:
recognizing objects including pedestrians and the object to be followed;
setting a position having a predetermined positional relationship with the object to be followed as an arrival position of the moving object;
generating a route from the position of the moving object to the arrival position;
controlling a driving device attached to the moving object so that the moving object moves along the route;
when performing the recognition, further recognizing the orientation of the object to be followed; and
when performing the setting, setting, as the arrival position, a candidate closest to the moving object among a plurality of candidates for the arrival position which are lined up behind the object to be followed in a direction intersecting the orientation of the object to be followed when a predetermined condition including a condition regarding an angle between the orientation of the object to be followed and the orientation of the moving object is not satisfied.

14. A program for causing a processor of a control device that controls a moving object moving autonomously by following an object to be followed in an area where a pedestrian walks to:
recognize objects including pedestrians and the object to be followed;
set a position having a predetermined positional relationship with the object to be followed as an arrival position of the moving object;
generate a route from the position of the moving object to the arrival position;
control a driving device attached to the moving object so that the moving object moves along the route;
when performing the recognition, further recognize the orientation of the object to be followed; and
when performing the setting, set, as the arrival position, a candidate closest to the moving object among a plurality of candidates for the arrival position which are lined up behind the object to be followed in a direction intersecting the orientation of the object to be followed when a predetermined condition including a condition regarding an angle between the orientation of the object to be followed and the orientation of the moving object is not satisfied.
